# EUROPÄISCHE PATENTANMELDUNG

(11) **EP 1 469 443 A2**
(43) Veröffentlichungstag der Anmeldung: **20.10.2004**
(21) Anmeldenummer: 04009220.7
(22) Anmeldetag: 19.04.2004
(51) Int. Cl.: G09F 21/04

(54) **Informations-und Hilfe-Anforderungsvorrichtung für Verkehrsteilnehmer**

(30) Priorität: 17.04.2003 DE 20306141 U
(71) Anmelder: Chaloupek, Karel, 80997 München (DE)
(72) Erfinder: Chaloupek, Karel, 80997 München (DE)
(74) Vertreter: Alber, Norbert, Dipl.-Ing.

(57) **Zusammenfassung**

Die Erfindung betrifft eine optische und elektronische Informations- und Hilfeanforderungsvorrichtung für den Verkehrsteilnehmer; mit wenigstens einer Anzeigefläche (2), mehreren Anzeigmöglichkeiten und einer Auswahlvorrichtung (3) zur Auswahl der gewünschten Anzeigemöglichkeit.

## Beschreibung

### I. Anwendungsgebiet

Die Erfindung betrifft eine optische und elektronische Informations- und Hilfeanforderungsvorrichtung für den Verkehrsteilnehmer.

### II. Stand der Technik

Bei auftretenden Problemen und Gefahren, die durch Verkehrsteilnehmer verursacht werden bzw. in die Verkehrsteilnehmer und Verkehrsmittel verwickelt sind, werden von den betroffenen Verkehrsteilnehmern derzeit nur Mittel wie z. B. das Warndreieck oder die Blinkeranlage des Verkehrsmittels benutzt um andere Verkehrsteilnehmer über das Problem bzw. die Gefahr zu unterrichten.

### III. Problem

Bei dieser Art der Problemsignalisierung ist für andere Verkehrsteilnehmer keine eindeutige Informationsgewinnung möglich. Es ist für die nicht betroffenen Verkehrsteilnehmer nicht ersichtlich, von welcher Art von Problem andere Verkehrsteilnehmer betroffen sind, und welche Art von Hilfe diese benötigen würden. Aktuell in Gebrauch sind übliche Informationssysteme wie das klassische Warndreieck oder eine Warnblinkanlage, geben keine näheren Auskünfte über die Art des Problems, ob es sich z. B. um einen Unfall, eine Panne, einen medizinischen Notfall usw. handelt. Daher können nicht betroffene Verkehrsteilnehmer auch nicht gezielt auf Problemfälle reagieren. Weiterhin kann durch die derzeitig benutzten Systeme bzw. Mittel keine gezielte Hilfeanforderung von dem betroffenen bzw. den betroffenen Verkehrsteilnehmern bei Problemen und Notsituationen angezeigt werden.

Bei einfachen Pannen, medizinischen Notfällen und bei Unfällen ist für die nicht betroffenen Verkehrsteilnehmer nicht ersichtlich, welche Art von Hilfe bzw. Unterstützung der betroffene Teilnehmer bzw. die betroffenen Verkehrsteilnehmer benötigen würden. Es können verschiedene Arten von Hilfe benötigt werden, z. B. keine, Reparatur- bzw. Pannenhilfe oder auch medizinische Hilfe. Es wäre für alle Verkehrsteilnehmer von Vorteil, wenn diese gezielt über die Art von Verkehrsproblemen durch die Betroffenen informiert würden, um Problem- und Gefahrstellen im Verkehr besser einschätzen zu können. Dadurch wären nicht betroffene Verkehrsteilnehmer besser in der Lage, gezielt zu helfen (z. B. vorbeifahrende Ärzte, vorbeifahrender Kfz-Mechaniker etc.). Außerdem wäre es für den oder die Betroffenen von großem Vorteil, wenn gezielt Hilfe angefordert werden könnte. Mit der vorliegenden Erfindung soll das Problem der Informationsgebung bzw. Hilfeanforderung bei Problemen im Verkehr gelöst werden.

### IV. Lösung

Diese Aufgabe wird durch die Merkmale der Ansprüche 1 und 13 gelöst. Vorteilhafte Ausführungsformen werden in den Unteransprüchen beschrieben.

Durch die Auswahl unter mehreren Anzeigemöglichkeiten können auf den einzelnen Anzeigemöglichkeiten unterschiedliche Aussagen, nämlich z. B. Anforderung einer speziellen Hilfe (z. B. technische oder medizinische Hilfe) visualisiert werden, oder auch die Mitteilung, dass keine Hilfssituation vorliegt, und alles in Ordnung ist ("O.K.").

Für die Anforderung spezieller Hilfe werden bevorzugt non-verbale Symbole wie ein Rotes Kreuz oder ein Äskulapstab oder eine Kombination von beidem für medizinische Hilfe, ein Schraubenschlüssel für technische Hilfe und "SOS" für allgemeine Hilfe und ähnliches verwendet.

Natürlich können zusätzlich auch Worte verwendet werden, die jedoch von den vorbeifahrenden Autofahrern teilweise nicht schnell genug erfaßt werden können.

Die Auswahl und speziell die Anzeigemöglichkeit kann entweder mechanisch oder elektrisch/elektronisch ausgeführt werden, wobei für die elektrische/elektronische Realisierung typisch ist, dass auf einer einzigen Anzeigefläche unterschiedliche Anzeigen erzeugt werden können, während bei der mechanischen Ausführung für jede der Anzeigemöglichkeiten eine separate Anzeigefläche verwendet wird.

Die Anzeigevorrichtung soll vorzugsweise an bereits vorhandenen Kraftfahrzeugen nachrüstbar sein, und insbesondere mit wenigstens einem der Sicherheitsmerkmale des Kfz funktional gekoppelt sein, so dass sich die Hilfe-Anforderungsvorrichtung automatisch aktiviert, wenn z. B. die Warnblinkanlage, ein Airbag oder die Notruftaste des Autotelefons betätigt wird.

Zu diesem Zweck befindet sich die Aktivierungstaste der Hilfe-Anforderungsvorrichtung meist getrennt vom Rest der Anforderungsvorrichtung in Griffweite des Fahrers, während der Rest, insbesondere die Anzeigefläche, meist im Heckbereich des Fahrzeuges, etwa an oder hinter der Heckscheibe oder an oder in dem Kofferraumdeckel/Heckdeckel des Fahrzeuges angeordnet ist, um bei einem neben der Straße parkenden Fahrzeug von den nachfolgenden Fahrzeugen leicht gesehen werden zu können.

Bei einer mechanischen Lösung der Vorrichtung sind die einzelnen Anzeigeflächen ganz oder zumindest ihr Aufdruck mit einer reflektierenden Oberfläche ausgestattet.

Die Anzeigeflächen können in sich starre Tafeln aus Kunststoff, Karton oder ähnlichem sein, oder aus flexiblem Material, etwa Folie oder einem Textilmaterial bestehen. Dementsprechend unterscheidet sich die Aufbewahrungsform:
starre Tafeln werden in ein vorzugsweise kastenförmiges Gehäuse eingesteckt zum Aufbewahren, wobei die Frontfläche des Gehäuses, die evtl. einen durchsichtigen Durchbruch aufweist, zum Sichtbarmachen des Aufdruckes auf der Vorderseite der Tafeln dienen kann.

Das kastenförmige Gehäuse kann insbesondere die Frontfläche eines kofferartigen bereits vorhandenen Gegenstandes wie etwa eines Erste-Hilfe-Koffers oder Werkzeugkoffers sein.

Flexible Anzeigeflächen können dagegen zusammengelegt oder zusammengerollt aufbewahrt werden, insbesondere in einem Aufrollgehäuse mittels Federspannung aufgerollt sein, so dass das aus dem Gehäuse vorstehende Ende erfaßt und die Anzeigefläche aus dem Aufrollgehäuse so weit herausgezogen werden kann, dass der Aufdruck vollständig sichtbar ist, und ohne dass sich die Hinterkante der Anzeigefläche vom Wickelkern löst.

Dabei kann jede einzelne Anzeigefläche separat in einem z. B. gemeinsamen Aufrollgehäuse aufgerollt sein, wobei vorzugsweise die beiden Seiten ein und derselben Anzeigefläche mit unterschiedlichen Aufdrucken versehen werden können, um die Anzahl an Folien zu reduzieren.

Eine andere Möglichkeit besteht darin, die einzelnen Anzeigeflächen hintereinander fortlaufend bahnförmig zu gestalten, und jedes der Enden der Bahn an einem separaten Querstab zu befestigen zum Zwecke des Aufrollens. Zur Aufbewahrung werden die beiden Querstäbe bis auf Anlage gegeneinander gerollt. Zum Benutzen werden - nach Art einer Schriftrolle von den Querstäben die Bereiche soweit abgewickelt, dass zwischen den beiden Querstäben der gewünschte Aufdruck sichtbar ist. Die beiden Querstäbe werden durch seitlich an den Querstäben anzuordnende Längsstäbe im gewünschten Abstand gehalten, und zwar durch eine drehfeste Verbindung, um ein weiteres Abwickeln von den Querstäben zu verhindern.

Die flexiblen Anzeigeflächen können auch als Füllfläche im Inneren eines Warndreieckes benutzt werden, wobei dann - bei Befestigung der dreieckigen Anzeigeflächen an der Basis des Dreiecks - nur die gewünschte Anzeigefläche zur Spitze des Dreiecks aus hochgespannt wird, während die anderen Anzeigeflächen zusammengefaltet, zusammengerollt oder herabhängend von der Basis verbleiben.

In einem vorbeschriebenen Aufrollgehäuse können zusätzlich Lichtquellen, insbesondere mehrere Leuchtdioden, so angeordnet sein, dass sie den Aufdruck der ausgezogenen, gespannten Anzeigefläche beleuchten. Natürlich sind an dem frei zugänglichen vorderen Ende der Anzeigefläche passende Befestigungsmittel wie Saugnäpfe, Magnete, Haken, Ösen, also kraftschlüssige und/oder formschlüssige Befestigungsmöglichkeiten, angeordnet, um die ausgezogene Anzeigefläche an einem Punkt der Umgebung zu befestigen.

Dabei wird das Aufrollgehäuse vorzugsweise auf der Innenseite der Heckscheibe an deren Oberkante befestigt, oder bei einem aufgeklappten Kofferraumdeckel/Heckdeckel nahe der Oberkante auf der Innenseite des Deckels.

Bei einer Lichtquelle zum Beleuchten der Anzeigefläche ist vorzugsweise mit der Lichtquelle ein aufladbarer Akkumulator als Energiequelle vorhanden, der bei Nichtgebrauch der Vorrichtung ständig mit dem elektrischen Bordnetz des Kfz verbunden und damit ständig geladen wird, so dass auch bei vollständigem Stromausfall des Kraftfahrzeuges die Beleuchtung über längere Zeit funktioniert.

Bei einer elektrischen/elektronischen Lösung wird als dann vorzugsweise einzige Anzeigefläche entweder ein Flachbildschirm, z. B. ein TFT-Bildschirm, vorzugsweise in einer flexiblen, folienartigen Bauform, verwendet, die dann ebenfalls bei Nichtbedarf aufgerollt und damit platzsparend aufbewahrt werden kann. Eine andere Möglichkeit besteht in einer Anzeigefläche mit einzeln rasterartig ansteuerbaren Leuchtpunkten oder Leuchtfeldern, beispielsweise rasterartig angeordneten Leuchtdioden, die einzeln angesteuert werden können und damit in bekannter Art und Weise Buchstaben, Bilder oder Symbole erzeugen können. Für jede der Anzeigemöglichkeiten ist dann vorzugsweise ein separater Aktivierungsknopf vorhanden.

Als eine solche pixelförmige Anzeigefläche kann beispielsweise eine vergrößerte dritte Heckleuchte, die also bei Verwendung als Heckleuchte mit ihrer Gesamtfläche rot aufleuchtet, bei Verwendung als Anzeigefläche die einzelnen leuchtenden Pixel bzw. LED's selektiv zur Formung des gewünschten Symboles.

Eine andere Möglichkeit besteht darin, die Heckscheibe selbst als Anzeigefläche zu verwenden, indem in der Heckscheibe, vorzugsweise auf der zwischen den Glasschichten vorhandenen Sicherheitsfolie, bereits die gewünschten Darstellungen allesamt enthalten, jedoch im Normalzustand nicht oder kaum sichtbar sind. Erst durch spezielle Maßnahmen, beispielsweise Beleuchten mittels Licht in einem bestimmten Winkel oder mittels Licht einer bestimmten Wellenlänge, können die einzelnen Darstellungen und Symbole wahlweise deutlich sichtbar gemacht werden. Das Licht der speziellen Wellenlänge kann beispielsweise mittels unterschiedlicher Leuchtdioden zur Verfügung gestellt werden, die sich beispielsweise in der Kante, beispielsweise der Oberkante, der Heckscheibe befinden können.

Des weiteren kann die Vorrichtung in einer vorzugsweise einzigen, starken Lichtquelle bestehen, vor der eine Projektionsoptik und nach Art eines Dias oder einer Blende eine Anzeige vorgeordnet wird, so dass also mittels der Projektionsoptik das gewünschte Symbol oder die gewünschte Anzeige auf eine ProjeKtionsfläche geworfen wird, wobei vorzugsweise als Projektionsfläche die Innenseite des aufgeklappten Kofferraumdeckels oder die Innenseite der Heckscheibe verwendet wird. Lichtquelle und Projektionsoptik werden dann vorzugsweise nahe der jeweiligen Oberkante angeordnet, so dass das Aufstrahlen unter einem spitzen Winkel auf die jeweilige Fläche erfolgt.

Eine solche Hilfeanforderungs-Vorrichtung, vor allem in elektrischer/elektronischer Form, vor allem, wenn sie in einem Auto eingebaut ist, kann vorzugsweise mit einem ebenfalls im Auto eingebauten Autotelefon oder einem im Auto benutzten, z.B. in die Freisprechanlage des Autos eingeklinkten, Handy sinnvoll gekoppelt werden:

Zum einen kann dabei ein Telefon verwendet werden, welches eine offizielle Notruftaste zum Absetzen eines Notrufes an Polizei/Feuerwehr aufweist. Selbst wenn eine solche Taste nicht vorhanden ist, und dies über Eingeben der entsprechenden Notrufnummer erfolgen muss, kann das Absetzen eines Notrufes mit der Hilfeanforderungsvorrichtung gekoppelt sein, die mittels eines solchen Notrufes automatisch aktiviert wird.

Ebenso kann umgekehrt das Aktivieren der Hilfeanforderungs-Vorrichtung das automatische Absetzen eines Notrufes mittels des Telefons bewirken.

Zusätzlich kann vorteilhafterweise die Hilfeanforderungsvorrichtung und/oder das Auto und/oder das entsprechende Telefon mit einer Positions-Bestimmungsvorrichtung gekoppelt sein bzw. in eine solche integriert sein. Dabei kann es sich entweder um das bekannte GPS (Global Positioning System) handeln oder um eine Möglichkeit, mittels des Funknetzbetreibers für das Handy und der von diesem betriebenen Funkzellen, bei denen das Handy jeweils eingeloggt ist, eine Ortung des Standortes des Handys vorzunehmen, die so genannte Funkzellen-Ortung.

In beiden Fällen wird der ermittelte Standort beim Absetzen eines Notrufes mitgesendet bzw. dem Empfänger, also dem Rettungsdienst oder der Polizei auf anderem Wege bekannt gegeben, beispielsweise von Seiten des Funknetzbetreibers des Handys.

### V. Beschreibung von Beispielen

Beispielhafte Ausführungsformen entsprechend der Erfindung sind anhand der folgenden Zeichnungen beschrieben. Es zeigen:
- Fig. 1:: Ausführungsformen mit formhaltigen Anzeigetafeln,
- Fig. 2:: die Anzeige innerhalb des Warndreiecks,
- Fig. 3a:: Folien in einem Aufrollgehäuse,
- Fig. 3b:: die Anordnung an der Heckscheibe,
- Fig. 4:: eine andere Wickel-Lösung,
- Fig. 5:: eine Lösung mit Flachbildschirm,
- Fig. 6:: eine in die Heckscheibe integrierte elektrische Lösung,
- Fig. 7:: eine Pixel-Anzeige,
- Fig. 8:: eine Projektionslösung an der Heckscheibe und
- Fig. 9:: eine Projektionslösung am Heckdeckel.

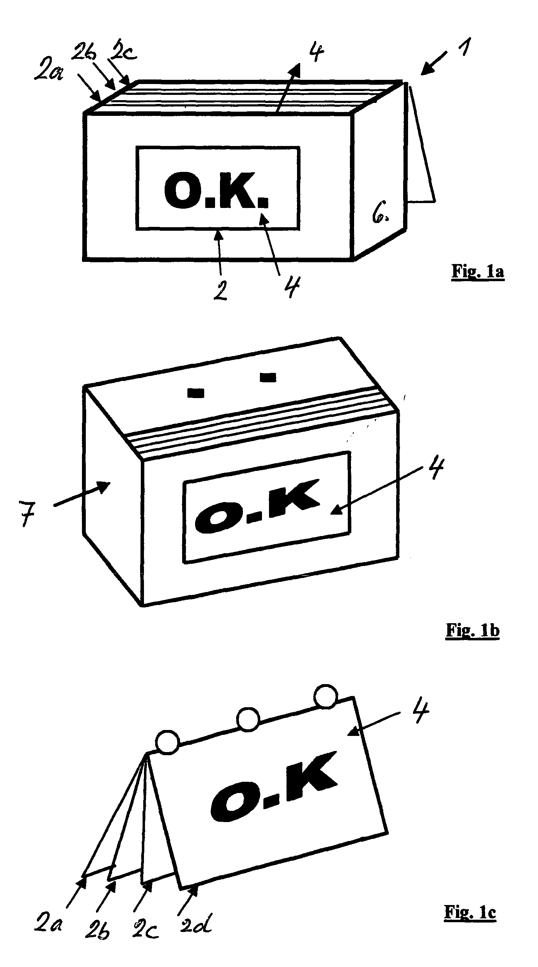

Fig. 1a zeigt eine Anforderungs-Vorrichtung 1 mit einem kastenförmigen Gehäuse 6, in welches die einzelnen Anzeigeflächen 2a,b,c in Form von Tafeln 4 in die offenbare Oberseite eingesteckt werden können.

In der Frontfläche ist als Anzeigefläche 2 eine großflächige Öffnung vorhanden, so dass hier die an vorderster Stelle eingesteckte Tafel 4 und deren Aufdruck sichtbar ist.

Das Gehäuse 6 dient damit gleichzeitig als Aufbewahrungsgehäuse als auch als Anzeigefläche.

Fig. 1b zeigt eine Lösung, bei der ein solches dünnes, kastenförmiges Gehäuse 6 an der Frontfläche eines vorhandenen Koffers, etwa eines Erste-Hilfe-Koffers 7 oder eines Werkzeugkoffers, in analoger Weise angeordnet ist.

Bei Fig. 1c sind die einzelnen Tafeln 4, die als Anzeigeflächen 2a,b,c,d dienen, über eine Art Ringbuchmechanik miteinander verbunden, so dass die einzelnen Tafeln 4 umgeblättert werden können und die gewünschte Vorderseite dem nachfolgenden Verkehr präsentiert werden kann. Diese Lösung hat wie auch die der Fig. 1a und 1b den Vorteil, dass bei den einzelnen Tafeln 4 Vorder- und Rückseite jeweils als unterschiedliche Anzeigeflächen 2a,b,c verwendet werden können.

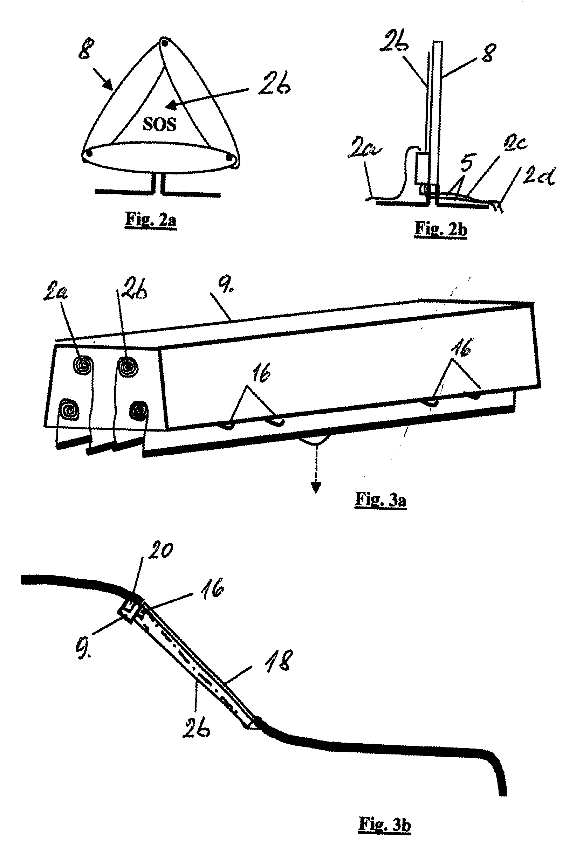

Die Fig. 2a und 2b zeigen ein aufgeklapptes Warndreieck 8 in Frontansicht und Seitenansicht, bei dem als Anzeigefläche 2b eine dreieckige Folie im Inneren des Warndreiecks aufgespannt ist, die den entsprechenden Aufdruck trägt. Wie vor allem Fig. 2b zeigt, sind die einzelnen Anzeigeflächen vorzugsweise in Form von Folien 5, an der unteren Basis des Dreiecks, also dem entsprechenden Basisteil des Warndreiecks 8, befestigt, so dass nur die gewünschte Anzeigefläche 2b zur Spitze nach oben gespannt und dort, etwa am Befestigungspunkt der beiden nach oben laufenden Schenkel des Warndreiecks, fixiert wird, während die nicht benötigten Anzeigeflächen 2a,b,c unten verbleiben, also frei herabhängen oder aufgerollt verbleiben.

Fig. 3a zeigt eine Aufroll-Lösung, bei der in einem Aufrollgehäuse 9 die einzelnen flexiblen Anzeigeflächen 2a,b,... jeweils separat auf einem separaten Wickelkern innerhalb des Aufrollgehäuses 9 aufgerollt und mittels Federkraft in der aufgerollten Position gespannt gehalten sind.

Eine verdickte vordere Endkante der Anzeigeflächen 2a,b verhindert, dass sich diese Vorderkanten in das Gehäuse hinein aufrollen, indem der Austrittsschlitz schmaler ist als die verdickte Vorderkante. Auf diese Art und Weise kann jede der gewünschten Anzeigeflächen 2a,b ergriffen und bis auf Anschlag aus dem Gehäuse 9 herausgezogen werden, wodurch der darauf aufgebrachte Aufdruck sichtbar wird.

Zusätzlich ist auf der Außenseite des Gehäuses 9, nahe der Austrittsschlitze, eine Beleuchtung vorgesehen in Form mehrerer Leuchtdioden 16, die in Längsrichtung entlang der Austrittsschlitze angeordnet sind und die herausgezogene Anzeigefläche 2a,b oder c, ... beleuchten.

In Fig. 3a ist das Aufrollgehäuse 9 der Fig. 3a oberhalb der Heckscheibe 18 im Inneren eines Kraftfahrzeuges so angeordnet, dass die Lichtquellen, also z. B. Leuchtdioden 16, in den Zwischenraum zwischen ausgezogener Anzeigefläche 2b und Heckscheibe 18 hinein und damit die Anzeigefläche beleuchten.

Natürlich ist an der vorderen Endkante jeder der ausziehbaren Anzeigeflächen eine Befestigungsvorrichtung, Saugnapf, Magnet oder ähnliches, zum Fixieren in der gewünschten ausgezogenen Stellung an der Umgebung vorhanden.

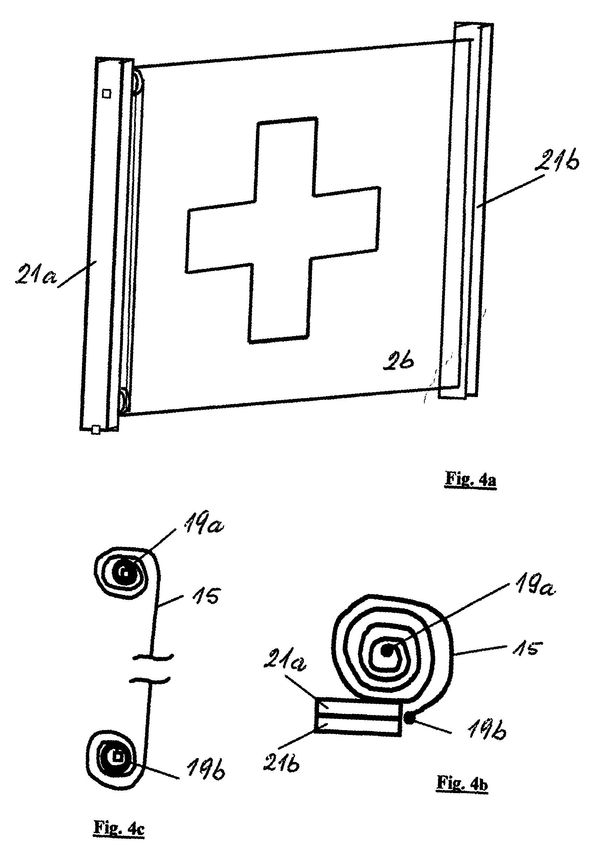

Die Fig. 4 zeigen die sog. Schriftrollen-Lösung.

Eine durchgehende Anzeigebahn 15, auf der die einzelnen Anzeigeflächen, z. B. 2b, aufeinander nachfolgen, sind mit ihren in Längsrichtung beabstandeten Kanten an Querstäben 19a,b fixiert. Im Aufbewahrungszustand gemäß Fig. 4b ist die Anzeigebahn 15 vorzugsweise auf einem der Querstäbe 19a vollständig aufgewickelt, so dass sich die beiden Querstäbe 19a,b in geringem Abstand zueinander befinden und damit die gesamte Vorrichtung, die zusätzlich noch die beiden Längsstäbe 21a,b umfasst, sehr platzsparend aufbewahrt werden kann.

Zum Benutzen wird auf die beiden Querstäbe 19a,b jeweils der nicht benötigte Teil der Anzeigebahn aufgewickelt, und die beiden Querstäbe auf einen solchen Abstand gebracht, dass sich im Bereich zwischen den Querstäben 19a,b die gewünschte Anzeigefläche, z. B. Anzeigefläche 2b wie in Fig. 4a dargestellt, befindet. In dieser Lage werden die Querstäbe 19a,b fixiert, indem auf ihre Enden, jeweils die analogen Enden der beiden Querstäbe verbindend, jeweils einer der Längsstäbe 21a,b aufgesteckt wird, beispielsweise mittels Vierkantlöcher, die auf entsprechende aus den Querstäben 19a,b stirnseitig vorstehende Vierkantzapfen passen. In dieser aufgespannten Form gemäß Fig. 4a kann die Vorrichtung an der gewünschten Stelle positioniert werden.

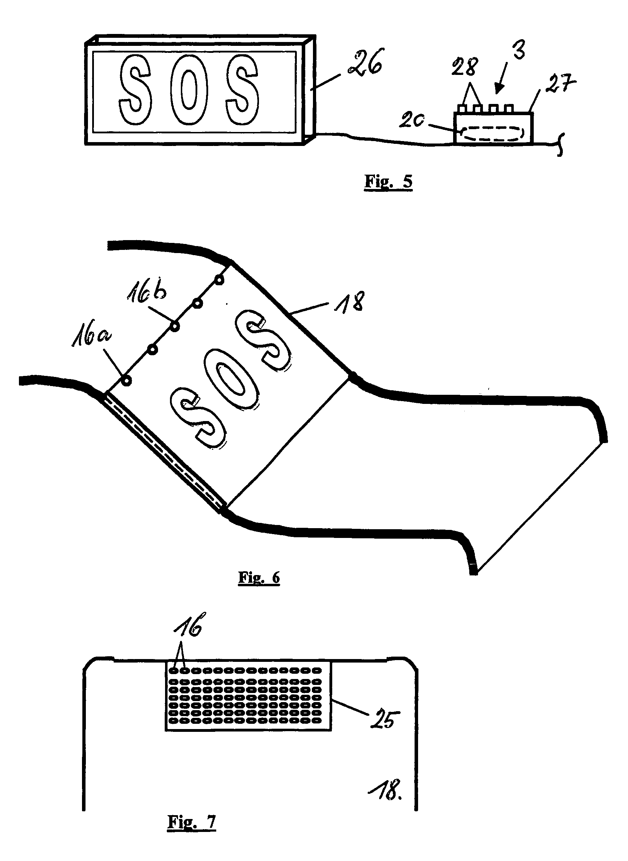

Fig. 5 zeigt eine elektrische Lösung in Form eines Flachbildschirms 26, der von einer elektronischen Steuerung 27 aus angesteuert wird, welche u. a. die Auswahlschalter 28, die die Auswahlvorrichtung 3 darstellen, und einen Akkumulator 20 beinhaltet. Der Akkumulator 20 ist auch in diesem Fall bei Nichtgebrauch der Vorrichtung ständig mit dem Bordnetz des Kraftfahrzeuges in Verbindung, um ständig geladen gehalten zu werden.

Fig. 6 zeigt die Integration der Vorrichtung in die Heckscheibe 18 eines Kraftfahrzeuges. Dabei sind die gewünschten Anzeigen ineinander großflächig bereits in der Heckscheibe 18 integriert, beispielsweise im Glas der Heckscheibe oder speziell in der Sicherheitsfolie im Inneren zwischen den beiden Glasschichten. Die Anbringung erfolgt so, dass ohne Aktivierung die Darstellungen in der Heckscheibe nicht oder kaum sichtbar sind, jedenfalls nicht störend sichtbar, bei Bedarf die Aufdrucke jedoch einzeln aktivierbar sind, beispielsweise durch Bestrahlen mittels Licht einer bestimmten Wellenlänge.

Die einzelnen Wellenlängen können zur Verfügung gestellt werden durch Leuchtdioden 16a,b,.. der jeweiligen Wellenlänge, wie sie beispielsweise an der Oberkante der Heckscheibe in diese integriert oder nahe an dieser angebracht sein können, und die dann wiederum mit einer entsprechenden Steuerung, Stromversorgung und Auswahlmöglichkeit für den Benutzer verbunden sein müssen.

Fig. 7 zeigt eine Heckscheibe 18, in deren oberen mittleren Bereich wie üblich eine sog. 3. Bremsleuchte 25, die aus einer Vielzahl einzeln ansteuerbarer Leuchtpunkte, beispielsweise Leuchtdioden 16, besteht, jedoch eine größere Anzahl von Leuchtpunkten und damit insgesamt eine größere Fläche besitzt als dies für 3. Bremsleuchten bisher als Mindestanforderung vorgegeben ist.

Bei der Benutzung als Anzeigefläche 2a oder b werden die - über die gesamte Fläche rasterartig angeordneten Leuchtpixel - einzeln in einer solchen Anordnung angesteuert, dass die gewünschte Anzeige erscheint.

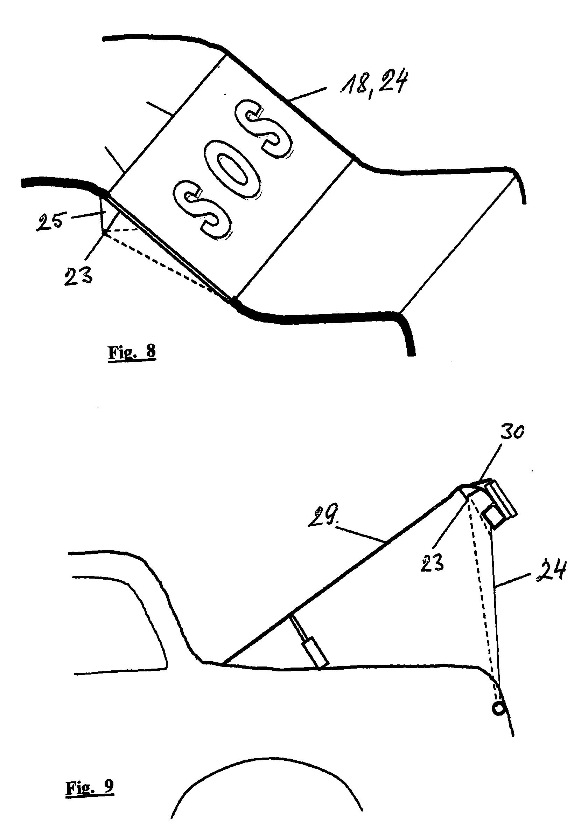

Die Fig. 8 und 9 zeigen Projektionslösungen:

In Fig. 8 ist die Projektionsoptik 23 nahe der Oberkante der Heckscheibe 18 im Inneren des Kfz angeordnet, beispielsweise an der Unterkante des Gehäuses für die 3. Bremsleuchte 25, da dorthin ohnehin eine Stromversorgung geführt werden muss. Die Projektionsoptik 23, die natürlich eine starke Lichtquelle umfasst sowie Auswahlmöglichkeiten in Form von durchleuchtbaren Dias oder Blenden, die wiederum durch eine nicht dargestellte Auswahlmöglichkeit vor die, Projektionsoptik geschoben oder auf andere Art und Weise ausgewählt werden können, wirft das entsprechende Bild dann auf die Rückseite der durchsichtigen Heckscheibe 18, wodurch das dorthin geworfene Bild auch von außen sichtbar ist.

In Fig. 9 ist ähnliches an einer bei geöffnetem Heckdeckel 29 zwischen die freie Endkante des Heckdeckels 29 und die Unterkante des Kofferraumes gespannte Projektionsfläche 24.

Diese Projektionsfläche 24 wird durch eine Projektionsoptik 23, die im Inneren des Kofferraumdeckels angeordnet ist, analog zur Beschreibung der Fig. 8 mit dem gewünschten Symbol oder Aufdruck bestrahlt, jedoch nunmehr von der Rückseite, so dass diese Projektionsfläche 24 der Fig. 9 wenigstens teilweise lichtdurchlässig sein muss. Die Projektionsoptik 23 wird dabei vorzugsweise über die Stromversorgung, die durch den Kofferraumdeckel zur auf der Außenseite vorhandene Kennzeichenbeleuchtung 30 führt, mit Strom versorgt.

### BEZUGSZEICHENLISTE

- 1: Hilfe-Anforderungsvorrichtung
- 2: Anzeigeflächen
- 3: Auswahlvorrichtung
- 4: Tafeln
- 5: Folien
- 6: kastenförmiges Gehäuse
- 7: Erste-Hilfe-Koffer
- 8: Warndreieck
- 9: Aufprallgehäuse
- 10: Saugnapf
- 11: Klebefläche
- 12: Magnet
- 13: Haken
- 14: Öse
- 15: Anzeigebahn
- 16: Lichtquelle
- 17: LED
- 18: Heckscheibe
- 19a,b: Querstab
- 20: Akkumulator
- 21a,b: Längsstäbe
- 22: Befestigungsvorrichtung
- 23: Projektionsoptik
- 24: Projektionsfläche
- 25: 3. Bremsleuchte
- 26: Flachbildschirm
- 27: Steuerung
- 28: Auswahlschalter
- 29: Heckdeckel
- 30: Kennzeichen-Beleuchtung

## Patentansprüche

1. Hilfeanforderungs-Vorrichtung (1) mit
- wenigstens einer Anzeigefläche (2),
- mehreren Anzeigmöglichkeiten und
- einer Auswahlvorrichtung (3) zur Auswahl der gewünschten Anzeigemöglichkeit.

2. Hilfeanforderungs-Vorrichtung (1) nach Anspruch 1,
**dadurch gekennzeichnet, dass**
die Anzeigemöglichkeiten unterschiedliche Symbole und/oder Texte umfassen.
(mechanisch)

3. Hilfeanforderungs-Vorrichtung (1) nach einem der vorhergehenden Ansprüche,
**dadurch gekennzeichnet, dass**
- die verschiedenen Anzeigemöglichkeiten jeweils in einer separaten Anzeigefläche (2a,b), insbesondere Anzeige-Tafeln (4), bestehen, und/oder insbesondere
- die Aufschrift auf den Anzeigeflächen, insbesondere die gesamten Anzeigeflächen, mit einer reflektierenden Oberfläche ausgestattet sind, und/oder insbesondere
- die Anzeigeflächen (2a,b) aus flexiblem Material, insbesondere Folien (5) oder Textilmaterial, bestehen.

4. Hilfeanforderungs-Vorrichtung (1) nach einem der vorhergehenden Ansprüche,
**dadurch gekennzeichnet, dass**
- die Tafeln (4) in einem kastenförmigen (6) Gehäuse durch Einstecken aufbewahrt werden und die in vorderster Position eingesteckte Tafel (4) durch eine durchsichtige Anzeigefläche (2) in der Vorderfront des Gehäuses (6) sichtbar ist, und/oder insbesondere
- das kastenförmige Gehäuse (6) Bestandteil bzw. die Frontfläche eine Erste-Hilfe-Koffers (7) ist, und/oder insbesondere
- die flexiblen Anzeigeflächen (2a,b), insbesondere Folien (5a,b) als Innenfüllfläche an einem Warndreieck so angeordnet sind, dass nur die gewünschte Anzeigefläche z. B. (2a) von der Befestigungsbasis aus zur oberen Spitze des aufgestellten Warndreiecks (8) gespannt wird.

5. Hilfeanforderungs-Vorrichtung (1) nach einem der vorhergehenden Ansprüche,
**dadurch gekennzeichnet, dass**
- die flexiblen Anzeigeflächen (2a,b,...) insbesondere Folien (5) einzeln in einem gemeinsamen Aufrollgehäuse (9) mittels Federkraft aufgewickelt sind und einzeln entgegen der Federkraft soweit ausgezogen werden können, bis der Aufdruck vollständig sichtbar ist, und insbesondere
- das Aufrollgehäuse (9) Befestigungsvorrichtungen, insbesondere Saugnäpfe oder Magnete, insbesondere ausgebildet zum Anbringen in einem Kraftfahrzeug innen nahe der Oberkante der Heckscheibe oder Unterkante der Heckscheibe oder innen nahe der Oberkante des aufgeklappten Kofferraumdeckels bzw. Heckdeckels aufweist, bzw. an diesen Stellen im Kraftfahrzeug mittels einer Befestigungsvorrichtung fest montiert ist, und/oder insbesondere
- eine Befestigungsvorrichtung am freien Ende jeder der ausziehbaren flexiblen Anzeigeflächen (2a,b) angeordnet ist, insbesondere ein Saugnapf (10), eine Klebefläche (11) oder ein Magnet (12) oder eine formschlüssige Befestigungsvorrichtung wie ein Haken (13) oder eine Öse (14), ist, und/oder insbesondere
- in dem Aufrollgehäuse (9) eine Lichtquelle (16), insbesondere eine Reihe von Leuchtdioden (17) so angeordnet ist, dass sie den Aufdruck der ausgezogenen, gespannten Anzeigefläche beleuchtet.

6. Hilfeanforderungs-Vorrichtung (1) nach einem der vorhergehenden Ansprüche,
**dadurch gekennzeichnet, dass**
- bei einer Anordnung des Aufrollgehäuses (9) innen an der Oberkante der Heckscheibe (18) die Lichtquelle (16) in den Bereich zwischen Heckscheibe (18) und ausgezogene Anzeigefläche z. B. (2b) beleuchtet, und/oder insbesondere
- in dem Aufrollgehäuse (9) außer der Lichtquelle (16) ein aufladbarer Akkumulator (20) vorhanden ist, der ständig mit dem elektrischen Bordnetz des Kraftfahrzeuges verbunden und damit geladen ist, und/oder insbesondere die flexiblen Anzeigeflächen (2a,b,...) insbesondere Folien (5a,b,..) hintereinander fortlaufend als Anzeigebahn (15) ausgebildet ist, an deren Enden jeweils ein Querstab (19a,b) fest angeordnet ist, von denen jeweils einer als Wickelkern für die Aufbewahrung der Folienbahn dient.

7. Hilfeanforderungs-Vorrichtung (1) nach Anspruch 15,
**dadurch gekennzeichnet, dass**
- die Vorrichtung (1) zwei Längsstäbe (21a,b) umfasst, deren Länge etwa der Länge einer Anzeigefläche entspricht, und die Befestigungsvorrichtungen (22), insbesondere formschlüssige Befestigungsvorrichtungen, zum Einstecken je eines der Enden einer der Querstäbe (19a,b) in drehfester Position in jeweils eines der Enden der Längsstäbe (21a,b) aufweist, und/oder insbesondere
- das Aufrollgehäuse (9) zur Anordnung an der inneren freien Endkante des Kofferraumdeckels bzw. Heckdeckels aufweist sowie am freien Ende der einzelnen Anzeigeflächen Befestigungsvorrichtungen zum Befestigen an der Kofferraumkante und eine Lichtquelle (16) in oder nahe an dem Aufrollgehäuse (9) hinter der Auslassöffnung für die Anzeigeflächen (2a,b) so angeordnet ist, dass die Rückseite der dann teilweise lichtdurchlässigen Anzeigeflächen (2a,b) dadurch beleuchtet wird.
(elektrisch)

8. Hilfeanforderungs-Vorrichtung (1) nach einem der vorhergehenden Ansprüche,
**dadurch gekennzeichnet, dass**
- die Hilfsanforderungsvorrichtung (1) nur eine einzige Anzeigefläche (2) umfasst, auf der mit elektrischen, insbesondere elektronischen Mitteln unterschiedliche Anzeigen aufgeschaltet werden können, und die Auswahlvorrichtung (3) in üblichen Auswahlmitteln wie Schaltern oder Druckknöpfen für die einzelnen Anzeigemöglichkeiten bestehen, und/oder insbesondere
- die Anzeigefläche (2) ein Flachbildschirm, insbesondere in Form einer flexiblen Folie, ist und Befestigungsvorrichtungen, insbesondere Saugnäpfe (10), Klebeflächen (11), Magnete (12) etc. zum Befestigen an einer Trägerfläche, beispielsweise der Innenseite des Heckfensters oder der Innenseite des aufgeklappten Kofferraumdeckels, aufweist, und/oder insbesondere
- die Anzeigefläche (2) das Heckfenster ist und die einzelnen Anzeigemöglichkeiten in die Scheibe des Heckfensters, insbesondere in dessen Sicherheitsfolie eingearbeitet sind, insbesondere einander überlappend eingearbeitet sind, im deaktivierten Zustand nicht oder kaum sichtbar sind und vollständig durchsichtig bleiben, jedoch einzeln gezielt aktivierbar und damit sichtbar gemacht werden können, und/oder insbesondere
- das Sichtbarmachen durch Bestrahlen mit Licht einer definierten Wellenlänge erfolgt, und/oder insbesondere
- das Licht einer definierten Wellenlänge insbesondere durch Leuchtdioden (17) der entsprechenden Wellenlänge erzeugt wird und die Leuchtdioden (17) im Umfang, insbesondere der Oberkante der Heckscheibe (18), integriert sind.

9. Hilfeanforderungs-Vorrichtung (1) nach einem der vorhergehenden Ansprüche,
**dadurch gekennzeichnet, dass**
- die so genannte dritte Bremsleuchte (25) in der Mitte der Ober- oder Unterkante der Heckscheibe (18) eine gegenüber den gesetzlichen Erfordernissen vergrößerte, insbesondere auf mind. 10x15 cm, besser 20x15 cm vergrößerte sichtbare Fläche besitzt und zur Anzeige unterschiedlicher Anzeigemöglichkeiten ausgebildet ist, insbesondere als Flachbildschirm oder durch rasterförmig angeordnete, einzeln ansteuerbare Leuchtpunkte wie etwa Leuchtdioden (17) besteht, und/oder insbesondere
- die Hilfeanforderungs-Vorrichtung (1) eine Lichtquelle (16) mit einer davor angeordneten Projektionsoptik (23) umfasst, welche die Auswahlvorrichtung (3) für die verschiedenen Anzeigemöglichkeiten, insbesondere in Form von wechselbaren Blenden, enthält und das Licht in Form der gewählten Anzeige auf eine der Projektionsoptik (23) gegenüberliegende Projektionsfläche (24) projiziert, und/oder insbesondere die Projektionsfläche (24) die Innenseite der Heckscheibe ist und die Lichtquelle (16) mit Projektionsoptik (23) nahe der Oberkante der Heckscheibe, insbesondere am oder im Gehäuse der dritten Bremsleuchte (25), angeordnet ist, und/oder insbesondere
- die Projektionsfläche (24) die Innenseite des aufgeklappten Heckdeckels bzw. Kofferraumdeckels ist und die Lichtquelle (16) mit Projektionsoptik (23) nahe der Endkante des Deckels, insbesondere am oder in der Kabeldurchführung für die Kennzeichenbeleuchtung im Kofferraumdeckel angeordnet ist.
(allgemein)

10. Hilfeanforderungs-Vorrichtung (1) nach einem der vorhergehenden Ansprüche,
**dadurch gekennzeichnet, dass**
die Hilfeanforderungs-Vorrichtung (1) an einem Kraftfahrzeug nachrüstbar ist.

11. Hilfeanforderungs-Vorrichtung (1) nach einem der vorhergehenden Ansprüche,
**dadurch gekennzeichnet, dass**
- die Vorrichtung (1) automatisch aktiviert wird mittels funktioneller Koppelung mit einem der Sicherheitsmerkmale des Kraftfahrzeuges, insbesondere der Warnblinkanlage, den Airbags oder der im Autotelefon bzw. Handy integrierten Notruftaste, und/oder insbesondere
- eine Aktivierungstaste, insbesondere separate Aktivierungstasten für die einzelnen Anzeigemöglichkeiten, getrennt vom Rest der Hilfeanforderungs-Vorrichtung in Griffweite des Fahrers des Kraftfahrzeuges im Kraftfahrzeug angeordnet ist, insbesondere nahe an oder integriert in dem Schalter zum Betätigen der Warnblinkanlage.

12. Hilfeanforderungs-Vorrichtung (1) nach einem der vorhergehenden Ansprüche,
**dadurch gekennzeichnet, dass**
- die Aktivierung der Hilfeanforderungs-Vorrichtung (1) automatisch das Absetzen eines Notrufs mittels des Autotelefons oder mittels eines im oder nahe dem Auto im Einsatz befindlichen Handys des Kraftfahrzeugbesitzers erfolgt, und/oder insbesondere
- in der Hilfeanforderungs-Vorrichtung und/oder im Handy bzw. Autotelefon, welches zusammen mit der Vorrichtung benutzt wird, eine Positions-Bestimmungsvorrichtung, insbesondere ein Global Positioning System (GPS) und/oder eine Positions-Bestimmung mittels Funkzellenortung, integriert ist, und beim Absetzen eines Notrufs über das Telefon automatisch der Standort der Hilfeanforderungs-Vorrichtung (1) bzw. des Handys ermittelt und mit dem Notruf mitgesendet wird.

13. Kraftfahrzeug,
**dadurch gekennzeichnet, dass**
dem Kraftfahrzeug eine Hilfeanforderungsvorrichtung (1) gemäß einem der vorhergehenden Ansprüche zugeordnet ist, insbesondere in das Kraftfahrzeug integriert ist.
